# EUROPÄISCHE PATENTANMELDUNG

(11) **EP 4 813 542 A1**
(43) Veröffentlichungstag der Anmeldung: **30.09.2026**
(21) Anmeldenummer: 26166025.2
(22) Anmeldetag: 19.03.2026
(51) Int. Cl.: B21D 43/28, B23H 11/00, B23K 26/38, B23K 26/70, B26D 7/18, B21D 28/10, B21D 35/00, B21D 45/02, B23H 7/02, B26F 1/26

(54) **SEPARIERVERFAHREN UND VORRICHTUNG ZUM SEPARIEREN EINES WERKSTÜCKTEILS EINES TRENNEND BEARBEITETEN WERKSTÜCKS VON EINEM RESTWERKSTÜCK DES BEARBEITETEN WERKSTÜCKS**

(30) Priorität: 28.03.2025 DE 102025112138
(71) Anmelder: TRUMPF Werkzeugmaschinen SE + Co. KG, 71254 Ditzingen (DE)
(72) Erfinder: Krause, Stefan, 02681 Wilthen (DE); Mach, Patrick, 71404 Korb (DE)
(74) Vertreter: Trumpf Patentabteilung

(57) **Zusammenfassung**

Separierverfahren und Vorrichtung zum Separieren eines Werkstückteils eines trennend bearbeiteten Werkstücks von einem Restwerkstück des bearbeiteten Werkstücks

Aufgrund einer trennenden Werkstückbearbeitung sind eine werkstückteilseitige Trennfläche (12, 13) an einem Werkstückteil (3) des trennend bearbeiteten Werkstücks (1) und eine restseitige Trennfläche (14, 15) an einem Restwerkstück (6) des trennend bearbeiteten Werkstücks (1) gegen eine Hauptebene (5) des bearbeiteten Werkstücks (1) gleichsinnig geneigt und mit gegenseitiger Überdeckung parallel zu der Hauptebene (5) des bearbeiteten Werkstücks (1) einander senkrecht zu der Hauptebene (5) des bearbeiteten Werkstücks (1) gegenüberliegend angeordnet. Zum Separieren des Werkstückteils (2) von dem Restwerkstück (6) wird im Rahmen eines Separierverfahrens das bearbeitete Werkstück (1) mit seiner Hauptebene (5) horizontal oder unter einem spitzen Winkel gegen die Horizontale geneigt in einer Separierstellung ausgerichtet, in welcher das Werkstückteil (3) von dem Restwerkstück (6) in der Schwerkraftrichtung gehalten wird. Bei Separierstellung des bearbeiteten Werkstücks (1) wird eine separierende Schwingung des Werkstückteils (3) und/oder des Restwerkstücks (6) senkrecht zu der Hauptebene (5) des bearbeiteten Werkstücks (1) erzeugt, aufgrund derer das Werkstückteil (3) von dem Restwerkstück (6) separiert wird.

Eine maschinelle Separiervorrichtung ist zur Durchführung des vorstehenden Separierverfahrens ausgebildet.

## Beschreibung

Die Erfindung betrifft ein Separierverfahren zum Separieren eines Werkstückteils eines trennend bearbeiteten, vorzugsweise plattenartigen, Werkstücks, insbesondere eines trennend bearbeiteten Blechs, von einem das Werkstückteil in einer Hauptebene des bearbeiteten Werkstücks umgebenden Restwerkstück des bearbeiteten Werkstücks,
- wobei aufgrund der trennenden Werkstückbearbeitung eine werkstückteilseitige Trennfläche an dem Werkstückteil und eine restseitige Trennfläche an dem Restwerkstück gegen die Hauptebene des bearbeiteten Werkstücks gleichsinnig geneigt sind und mit gegenseitiger Überdeckung parallel zu der Hauptebene des bearbeiteten Werkstücks einander senkrecht zu der Hauptebene des bearbeiteten Werkstücks gegenüberliegen
   und
- wobei zum Separieren des Werkstückteils das bearbeitete Werkstück mit seiner Hauptebene horizontal oder unter einem spitzen Winkel gegen die Horizontale geneigt in einer Separierstellung ausgerichtet wird, in welcher das Werkstückteil von dem Restwerkstück in der Schwerkraftrichtung gehalten wird.

Die Erfindung betrifft außerdem ein Fertigungsverfahren, welches das vorgenannte Separierverfahren als Verfahrensschritt umfasst sowie eine maschinelle Vorrichtung und eine maschinelle Fertigungsanordnung zur Durchführung der vorgenannten Verfahren.

Gattungsgemäßer Stand der Technik ist offenbart in WO 91/10529 A1.

Der Stand der Technik betrifft ein Verfahren und eine maschinelle Vorrichtung zum Separieren eines zuvor an einem flächigen Werkstück freigeschnittenen Werkstückteils von dem Restwerkstück. Das freigeschnittene Werkstückteil ist in einer senkrecht zu einer Hauptebene des bearbeiteten Werkstücks verlaufenden Schnittebene trapezförmig. Das zu separierende Werkstückteil verjüngt sich dabei in der Schwerkraftrichtung. Einer gegen die Horizontale geneigten Schnittfläche am Rand des Werkstückteils liegt eine gleichsinnig geneigte Schnittfläche an dem das Werkstückteil umschließenden Restwerkstück gegenüber. Während des Separierprozesses ist das bearbeitete Werkstück mit seiner Hauptebene horizontal ausgerichtet. Zum Separieren des Werkstückteils von dem Restwerkstück wird ein Sauggreifer eingesetzt. Saugelemente des Sauggreifers saugen das Werkstückteil an dessen Oberseite an. Da das Werkstückteil an dem Restwerkstück derart angeordnet ist, dass es sich in der Schwerkraftrichtung verjüngt, wird das Werkstückteil in Schwerkraftrichtung von dem Restwerkstück gehalten. Zum Separieren von dem Restwerkstück wird das Werkstückteil mit einer nach oben gerichteten Bewegung der Saugelemente aus dem Restwerkstück ausgehoben. Anschließend wird das separierte Werkstückteil durch eine seitliche Bewegung der Saugelemente von dem Restwerkstück abgeführt.

Aufgabe der vorliegenden Erfindung ist es, das Separieren eines Werkstückteils eines trennend bearbeiteten Werkstücks von einem Restwerkstück des bearbeiteten Werkstücks auf einfache Art und Weise zu ermöglichen, wenn eine werkstückteilseitige Trennfläche an dem Werkstückteil und eine restseitige Trennfläche an dem Restwerkstück gegen die Hauptebene des bearbeiteten Werkstücks gleichsinnig geneigt sind und mit gegenseitiger Überdeckung parallel zu der Hauptebene des bearbeiteten Werkstücks einander senkrecht zu der Hauptebene des bearbeiteten Werkstücks gegenüberliegen.

Erfindungsgemäß gelöst wird diese Aufgabe durch die Verfahren gemäß den Patentansprüchen 1 und 8 und durch die zur Durchführung dieser Verfahren ausgebildeten Vorrichtungen gemäß den Patentansprüchen 10 und 18.

Im Falle der Erfindung wird das Werkstückteil von dem Restwerkstück separiert, indem bei Separierstellung des bearbeiteten Werkstücks eine separierende Schwingung des Werkstückteils und/oder des Restwerkstücks senkrecht zu der Hauptebene des bearbeiteten Werkstücks erzeugt wird. Aufgrund der separierenden Schwingung wird die bei Separierstellung des bearbeiteten Werkstücks anfänglich bestehende und in Schwerkraftrichtung wirksame Halterung des Werkstückteils an dem Restwerkstück aufgehoben, so dass sich das Werkstückteil aufgrund der separierenden Schwingung von dem Restwerkstück entfernen kann.

Die vorläufige Halterung des Werkstückteils an dem Restwerkstück des in der Separierstellung angeordneten bearbeiteten Werkstücks kann unterschiedliche Gründe haben.

Verjüngt sich das Werkstückteil an dem bearbeiteten Werkstück in der Schwerkraftrichtung, so wird das Werkstückteil - selbst wenn es bei der vorausgegangenen Werkstückbearbeitung vollständig von dem Restwerkstück getrennt worden ist - durch das Restwerkstück aufgrund eines Formschlusses an einer relativ zu dem Restwerkstück ausgeführten Bewegung in der Schwerkraftrichtung gehindert.

Ergänzend oder alternativ kann die anfängliche in der Schwerkraftrichtung wirksame Halterung des Werkstückteils an dem Restwerkstück des bearbeiteten Werkstücks darauf zurückzuführen sein, dass bei der trennenden Werkstückbearbeitung zwischen dem Werkstückteil und dem Restwerkstück eine lösbare Restverbindung etwa in Form von Microjoints oder Nanojoints belassen wurde.

Ist das Werkstückteil bei der trennenden Werkstückbearbeitung vollständig von dem Restwerkstück getrennt worden, kann der Grund für die in der Schwerkraftrichtung wirksame Halterung des Werkstückteils an dem Restwerkstück beispielsweise ein Verkanten des Werkstückteils an dem Restwerkstück sein.

Im Falle einer lösbaren Restverbindung zwischen dem Werkstückteil und dem Restwerkstück und auch im Falle eines Verkantens des Werkstückteils an dem Restwerkstück wird das Werkstückteil auch dann anfänglich an dem Restwerkstück in der Schwerkraftrichtung wirksam gehalten, wenn sich an dem in der Separierstellung angeordneten bearbeiteten Werkstück das Werkstückteil und die das Werkstückteil aufnehmende Öffnung an dem Restwerkstück in der Schwerkraftrichtung erweitern.

Als maschinelle Trennvorrichtung der erfindungsgemäßen maschinellen Fertigungsanordnung kommt insbesondere eine Laser-Trennvorrichtung in Frage.

Besondere Ausführungsarten der erfindungsgemäßen Verfahren und Vorrichtungen gemäß den Patentansprüchen 1, 8, 10 und 18 ergeben sich aus den abhängigen Patentansprüchen 2 bis 7, 9 und 11 bis 17.

Ausweislich der Patentansprüche 2 und 11 wird in Weiterbildung der Erfindung zum Separieren des Werkstückteils von dem Restwerkstück das Restwerkstück des in der Separierstellung angeordneten bearbeiteten Werkstücks in eine Schwingung senkrecht zu der Hauptebene des bearbeiteten Werkstücks versetzt.

Zu diesem Zweck wird in bevorzugter Ausgestaltung der Erfindung eine Halterung für das Restwerkstück genutzt, mittels derer das in der Separierstellung ausgerichtete bearbeitete Werkstück fixiert ist und die einen Teil der erfindungsgemäßen Separiereinheit ausbildet (Patentanspruch 12).

Patentanspruch 3 betrifft den Fall, dass bei der trennenden Werkstückbearbeitung beziehungsweise im Rahmen des erfindungsgemäßen Trenn-Verfahrensschritts zwischen dem Werkstückteil und dem Restwerkstück des bearbeiteten Werkstücks eine lösbare Restverbindung belassen wurde. Diese Restverbindung wird im Rahmen des erfindungsgemäßen Separierverfahrens gemäß Patentanspruch 3 aufgrund der separierenden Schwingung zerstört.

Ausweislich Patentanspruch 4 wird in weiterer Ausgestaltung der Erfindung durch die separierende Schwingung ein zwischen dem Werkstückteil und dem Restwerkstück des bearbeiteten Werkstücks anfänglich bestehender und in der Schwerkraftrichtung wirksamer Formschluss aufgehoben.

In weiterer bevorzugter Ausgestaltung des erfindungsgemäßen Separierverfahrens bewirkt die mittels der erfindungsgemäßen Separiereinheit erzeugte separierende Schwingung, dass das Werkstückteil mit einer Bewegung in der Schwerkraftrichtung (Patentanspruch 5) oder mit einer Bewegung entgegen der Schwerkraftrichtung (Patentanspruch 6) von dem Restwerkstück separiert wird.

Die Aufhebung eines in der Schwerkraftrichtung wirksamen Formschlusses zwischen dem Werkstückteil und dem Restwerkstück des bearbeiteten Werkstücks und eine Bewegung des von dem Restwerkstück separierten Werkstückteils in der Schwerkraftrichtung ist Gegenstand von Patentanspruch 9.

Bei dem Separier-Verfahrensschritt gemäß Patentanspruch 9 wird das Werkstückteil von dem Restwerkstück in der Schwerkraftrichtung gehalten, weil sich das Werkstückteil aufgrund der werkstückteilseitigen Trennfläche in der Schwerkraftrichtung verjüngt und die restseitige Trennfläche der werkstückteilseitigen Trennfläche an der in die Schwerkraftrichtung weisenden Seite der werkstückteilseitigen Trennfläche unter Ausbildung eines Formschlusses zwischen dem Werkstückteil und dem Restwerkstück gegenüberliegt.

Das bearbeitete Werkstück bei dem Separier-Verfahrensschritt derart auszurichten, ist insofern von Vorteil, als sich diese Ausrichtung des bearbeiteten Werkstücks auch bereits für den Transfer des bearbeiteten Werkstücks von der für den Trenn-Verfahrensschritt genutzten Trennvorrichtung zu der Separiereinheit der erfindungsgemäßen maschinellen Fertigungsanordnung empfiehlt. Aufgrund des in der Schwerkraftrichtung wirksamen Formschlusses zwischen dem Werkstückteil und dem Restwerkstück bedarf es keiner weiteren Maßnahmen, damit das Werkstückteil und das Restwerkstück bei dem sich an die trennende Werkstückbearbeitung anschließenden Transfer als Einheit gehandhabt werden können.

Damit ungeachtet des in der Schwerkraftrichtung wirksamen Formschlusses zwischen dem Werkstückteil und dem Restwerkstück das Werkstückteil in dem Separier-Verfahrensschritt von dem Restwerkstück mit einer Bewegung in Schwerkraftrichtung separiert werden kann, werden im Rahmen des Fertigungsverfahrens nach Patentanspruch 9 in dem Trenn-Verfahrensschritt die werkstückteilseitige Trennfläche und die restseitige Trennfläche mit einer die angestrebte Separierbewegung des Werkstückteils zulassenden Neigung gegen die Hauptebene des bearbeiteten Werkstücks und/oder mit einer die angestrebte Separierbewegung des Werkstückteils zulassenden gegenseitigen Überdeckung parallel zu der Hauptebene des bearbeiteten Werkstücks erzeugt.

Im Interesse definierter Verhältnisse beim Separieren des Werkstückteils von dem Restwerkstück ist in Weiterbildung der erfindungsgemäßen maschinellen Vorrichtung ein Fangelement vorgesehen, das während der separierenden Schwingung in Schwerkraftrichtung oberhalb des bearbeiteten Werkstücks diesem gegenüberliegt und sich vorzugsweise parallel zu der Hauptebene des bearbeiteten Werkstücks erstreckt (Patentanspruch 13). Das Fangelement verhindert eine unkontrollierte nach oben gerichtete Bewegung des von dem Restwerkstück separierten Werkstückteils.

In vorteilhafter Ausgestaltung der Erfindung ist das Fangelement als Prallplatte ausgebildet (Patentanspruch 14).

Im Falle der Vorrichtungsbauart gemäß Patentanspruch 15 ist aufgrund einer entsprechenden Anordnung des Fangelements gegenüber dem bearbeiteten Werkstück sichergestellt, dass das Werkstückteil mit einer Bewegung in der Schwerkraftrichtung von dem Restwerkstück separiert wird. Eine Separierbewegung des Werkstückteils entgegen der Schwerkraftrichtung wird durch das Fangelement aufgrund seines anspruchsgemäßen Abstands von der Oberseite des bearbeiteten Werkstücks verhindert.

Eine Separierbewegung des Werkstückteils entgegen der Schwerkraftrichtung lässt die Positionierung des Fangelements gemäß Patentanspruch 16 zu.

In weiterer vorteilhafter Ausgestaltung der Erfindung wird im Rahmen des erfindungsgemäßen Separierverfahrens die Ausrichtung des bearbeiteten Werkstücks gegenüber der Horizontalen während der separierenden Schwingung oder nach Abschluss der separierenden Schwingung verändert (Patentanspruch 7). Zu diesem Zweck weist die erfindungsgemäße maschinelle Vorrichtung eine Stellvorrichtung auf, mittels derer die Ausrichtung des bearbeiteten Werkstücks gegenüber der Horizontalen variabel einstellbar ist (Patentanspruch 17). Die Neigungsverstellung des bearbeiteten Werkstücks kann dazu dienen, den Separierprozess selbst zu unterstützen. Alternativ oder ergänzend kann die Neigung des bearbeiteten Werkstücks oder des nach Abschluss des Separierprozesses verbleibenden Restwerkstücks verändert werden, um ein Werkstückteil, das mit einer Bewegung entgegen der Schwerkraftrichtung von dem Restwerkstück separiert wurde und dabei auf die Oberseite des Restwerkstücks gelangt ist, unter Schwerkraftwirkung von dem Restwerkstück abzuführen.

Nachfolgend wir die Erfindung anhand beispielhafter schematischer Darstellungen näher erläutert. Es zeigen:
- Figur 1: einen Bereich eines trennend bearbeiteten und horizontal ausgerichteten Blechs mit einem Fertigteil und einem Teil eines Restgitters in der Ansicht von oben,
- Figur 2: eine Schnittdarstellung des Blechbereichs gemäß Figur 1 in einer in Figur 1 durch die Linie II-II angedeuteten Schnittebene,
- Figur 3: einen weiteren Bereich des trennend bearbeiteten Blechs gemäß den Figuren 1 und 2 mit einem weiteren Fertigteil und einem weiteren Teil des Restgitters in der Ansicht von oben,
- Figur 4: eine Schnittdarstellung des Blechbereichs gemäß Figur 3 in einer in Figur 3 durch die Linie IV-IV angedeuteten Schnittebene,
- Figur 5: eine transparente perspektivische Darstellung eines weiteren Bereichs des trennend bearbeiteten Blechs gemäß den Figuren 1 bis 4 mit einem weiteren Fertigteil und einem weiteren Teil des Restgitters,
- Figur 6: eine maschinelle Separiervorrichtung zum Separieren der Fertigteile gemäß den Figuren 1 bis 5 von dem Restgitter gemäß den Figuren 1 bis 5 vor Beginn eines Separierprozesses,
- Figur 7: die maschinelle Separiervorrichtung gemäß Figur 6 während des Separierprozesses und
- Figuren 8 und 9: die maschinelle Separiervorrichtung gemäß den Figuren 6 und 7 beim Ablegen eines der Fertigteile auf einer Fertigteilablage.

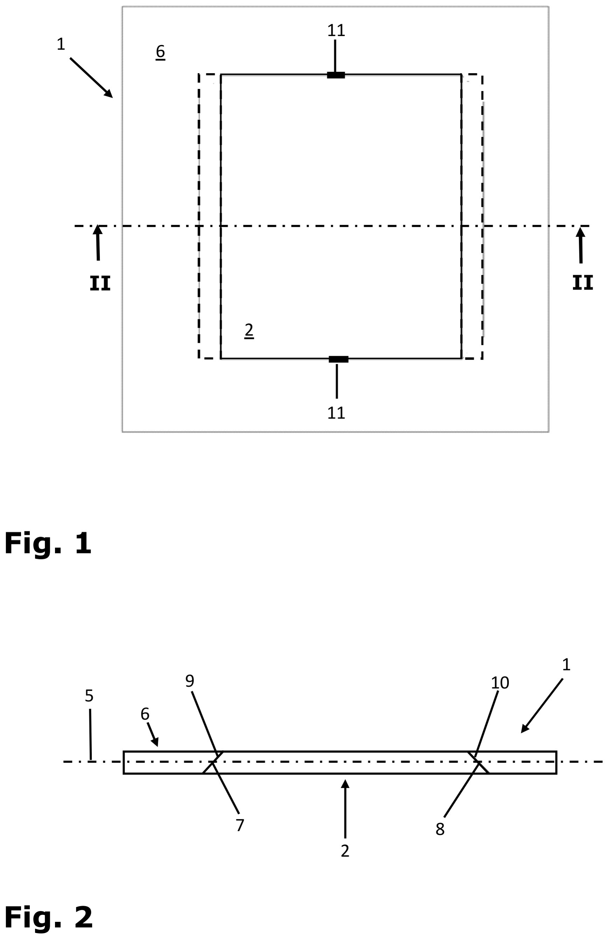

In den Figuren 1, 3 und 5 sind einander benachbarte Bereiche eines trennend bearbeiteten Werkstücks in Form eines trennend bearbeiteten Blechs 1 in der Draufsicht dargestellt.

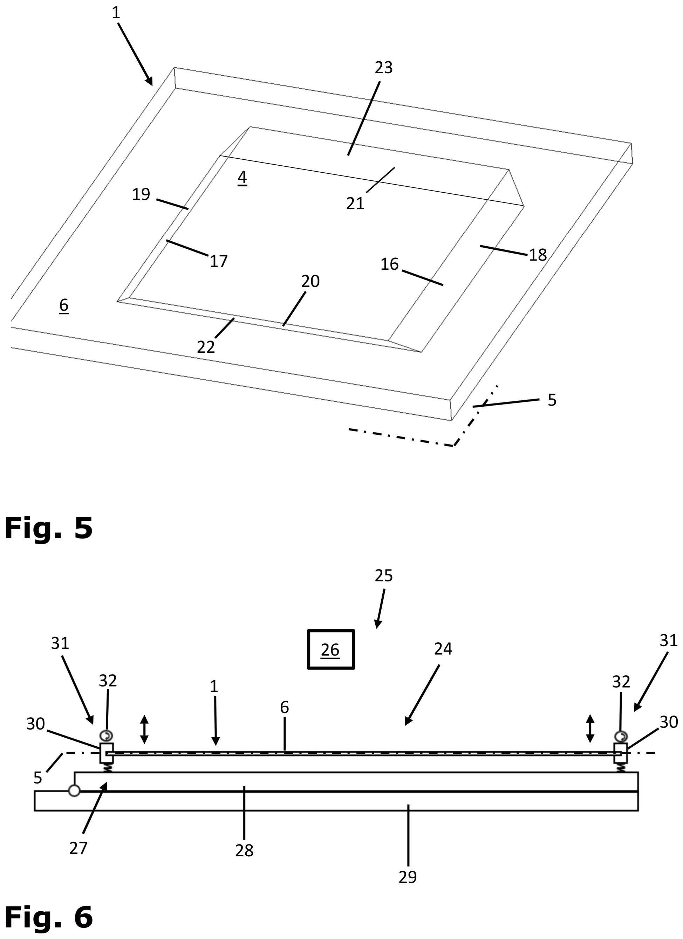

Als Werkstückteile wurden bei der trennenden Blechbearbeitung ein Fertigteil 2, ein Fertigteil 3 und zwei Fertigteile 4 hergestellt. Von den beiden Fertigteilen 4 ist in Figur 5 der Einfachheit halber nur eines gezeigt.

Die Fertigteile 2, 3, 4 werden in einer in den Figuren 2, 4 und 5 strichpunktiert angedeuteten Hauptebene 5 des bearbeiteten Blechs 1 von einem ein Restwerkstück ausbildenden Restgitter 6 umgeben, in dem dargestellten Beispielsfall vollständig umschlossen.

Zur trennenden Bearbeitung war das Blech mit seiner Hauptebene 5 horizontal ausgerichtet und dabei auf einer flächigen Blechauflage abgelegt. Die horizontale Ausrichtung wurde für das bearbeitete Blech 1 beibehalten.

Mittels einer zur trennenden Blechbearbeitung eingesetzten Laser-Trennvorrichtung wurden bei der trennenden Blechbearbeitung an den Fertigteilen 2, 3, 4 als werkstückteilseitige Trennflächen fertigteilseitige Trennflächen und an dem Restgitter 6 als restseitige Trennflächen restgitterseitige Trennflächen erzeugt.

Das Fertigteil 2 gemäß den Figuren 1 und 2 weist an zwei einander gegenüberliegenden Seiten als fertigteilseitige Trennflächen Fasen 7, 8 auf. Die Fasen 7, 8 sind gegen die Hauptebene 5 des bearbeiteten Blechs 1 geneigt.

An dem Restgitter 6 liegen den Fasen 7, 8 des Fertigteils 2 gleichsinnig gegen die Hauptebene 5 des bearbeiteten Blechs 1 geneigte restgitterseitige Trennflächen 9, 10 gegenüber. Die Fasen 7, 8 an dem Fertigteil 2 und die restgitterseitigen Trennflächen 9, 10 an dem Restgitter 6 erstrecken sich dabei mit gegenseitiger Überdeckung parallel zu der Hauptebene 5 des bearbeiteten Blechs 1 und liegen einander senkrecht zu der Hauptebene 5 des bearbeiteten Blechs 1 gegenüber, wobei die restgitterseitigen Trennflächen 9, 10 in der Schwerkraftrichtung oberhalb der Fasen 7, 8 des Fertigteils 2 angeordnet sind. In der in Figur 1 senkrecht zu der Zeichenebene entlang der Linie II-II verlaufenden Schnittebene besitzt das Fertigteil 2 dementsprechend einen sich in der Schwerkraftrichtung erweiternden Querschnitt (Figur 2).

Die beiden übrigen restgitterseitigen Trennflächen an dem Restgitter 6 verlaufen ebenso wie die zugeordneten fertigteilseitigen Trennflächen an dem Fertigteil 2 senkrecht zu der Hauptebene 5 des bearbeiteten Blechs 1.

Unter den gegebenen Umständen ist das Fertigteil 2 bei horizontaler Ausrichtung des bearbeiteten Blechs 1 bestrebt, sich unter Schwerkraftwirkung nach unten von dem Restgitter 6 zu lösen. Damit bei dem sich an die trennende Blechbearbeitung anschließenden Transfer des bearbeiteten Blechs 1 für dieses die horizontale Ausrichtung beibehalten und das bei der trennenden Bearbeitung erstellte Fertigteil 2 und das Restgitter 6 dessen ungeachtet als Einheit transferiert werden können, wurden bei der trennenden Blechbearbeitung zwischen dem Fertigteil 2 und dem Restgitter 6 als lösbare Restverbindung zwei in Figur 1 stark schematisch dargestellte Nanojoints 11 belassen. Durch die Nanojoints 11 wird das Fertigteil 2 von dem Restgitter 6 in der Schwerkraftrichtung gehalten.

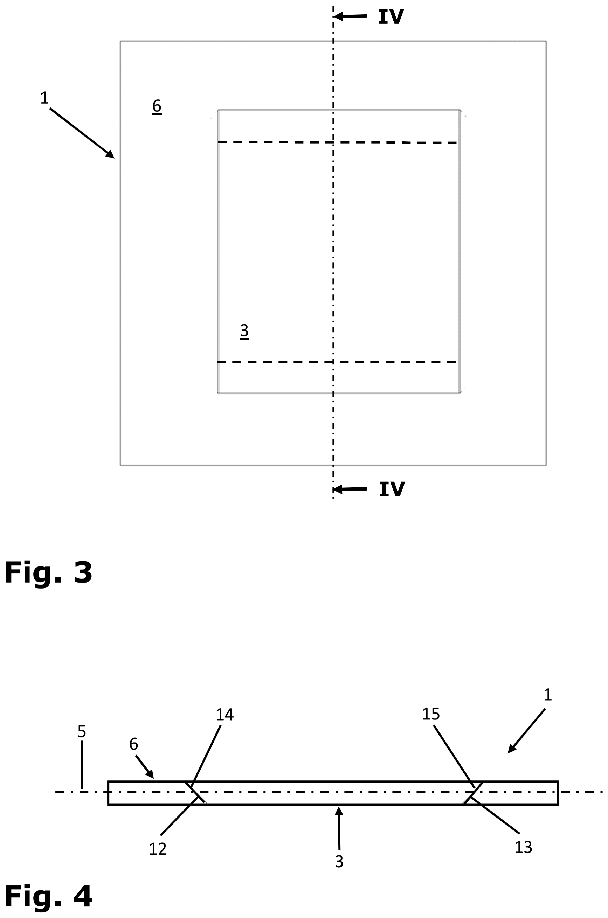

Das Fertigteil 3 gemäß den Figuren 3 und 4 ist an zwei einander gegenüberliegenden Seiten mit fertigteilseitigen Trennflächen in Form von Fasen 12, 13 versehen. Auch die Fasen 12, 13 sind gegen die Hauptebene 5 des bearbeiteten Blechs 1 geneigt, während die fertigteilseitigen Trennflächen an den beiden übrigen Seiten des rechteckigen Fertigteils 3 senkrecht zu der Hauptebene 5 des bearbeiteten Blechs 1 verlaufen.

Den Fasen 12, 13 an dem Fertigteil 3 liegen gleichsinnig gegen die Hauptebene 5 des bearbeiteten Blechs 1 geneigte restgitterseitige Trennflächen 14, 15 gegenüber.

Von den Verhältnissen gemäß den Figuren 1 und 2 unterscheiden sich die Verhältnisse gemäß den Figuren 3 und 4 dadurch, dass die restgitterseitigen Trennflächen 14, 15 in der Schwerkraftrichtung unterhalb der Fasen 12, 13 des Fertigteils 3 liegen. In der in Figur 3 senkrecht zu der Zeichenebene entlang der Linie IV-IV verlaufenden Schnittebene besitzt das Fertigteil 3 dementsprechend einen sich in der Schwerkraftrichtung verjüngenden Querschnitt (Figur 4). Aufgrund der Anordnung der restgitterseitigen Trennflächen 14, 15 unterhalb der Fasen 12, 13 ergibt sich zwischen dem Fertigteil 3 und dem Restgitter 6 ein in der Schwerkraftrichtung wirksamer Formschluss.

Die beiden übrigen restgitterseitigen Trennflächen an dem Restgitter 6 verlaufen ebenso wie die zugeordneten fertigteilseitigen Trennflächen an dem Fertigteil 3 senkrecht zu der Hauptebene 5 des bearbeiteten Blechs 1.

Aufgrund der in den Figuren 3 und 4 veranschaulichten Verhältnisse kann das bearbeitete Blech 1 bei seinem sich an die trennende Blechbearbeitung anschließenden Transfer ohne weiteres mit weiterhin horizontaler Ausrichtung als Einheit bewegt werden. Einer Restverbindung zwischen dem Fertigteil 3 und dem Restgitter 6 bedarf es nicht.

Gemäß Figur 5 sind an dem dargestellten Fertigteil 4 die Verhältnisse gemäß den Figuren 1 und 2 mit den Verhältnissen gemäß den Figuren 3 und 4 kombiniert. Entsprechend sind die Verhältnisse an dem nicht gezeigten Fertigteil 4.

Fasen 16, 17 an den Fertigteilen 4 liegen in der Schwerkraftrichtung unterhalb von restgitterseitigen Trennflächen 18, 19.

An der in die Schwerkraftrichtung weisenden Seite von Fasen 20, 21 an den Fertigteilen 4 sind restgitterseitige Trennflächen 22, 23 unter Ausbildung eines in der Schwerkraftrichtung wirksamen Formschlusses zwischen den Fertigteilen 4 und dem Restgitter 6 angeordnet.

Aufgrund des mittels der Fasen 20, 21 und der diesen zugeordneten restgitterseitigen Trennflächen 22, 23 erzeugten Formschlusses zwischen den Fertigteilen 4 und dem Restgitter 6 bedarf es auch bei den Verhältnissen gemäß Figur 5 keiner Restverbindung zwischen den Fertigteilen 4 und dem Restgitter 6, um einen sich an die trennende Blechbearbeitung anschließenden Transfer des bearbeiteten Blechs 1 mit weiterhin horizontaler Ausrichtung des bearbeiteten Blechs 1 zu ermöglichen.

In Figur 6 ist das bearbeitete Blech 1 an einer als maschinelle Separiervorrichtung 24 ausgebildeten maschinellen Vorrichtung gezeigt. Zu der Separiervorrichtung 24 wurde das bearbeitete Blech 1 nach Beendigung der trennenden Blechbearbeitung transferiert. Die Separiervorrichtung 24 ist Teil einer maschinellen Fertigungsanordnung 25, die neben der Separiervorrichtung 24 als maschinelle Trennvorrichtung zur Durchführung der trennenden Blechbearbeitung eine in Figur 6 stark schematisch angedeutete Laser-Trennvorrichtung 26 herkömmlicher Bauart umfasst.

Mittels einer Positioniervorrichtung 27 der Separiervorrichtung 24 ist das bearbeitete Blech 1 in Figur 6 in einer Separierstellung ausgerichtet. Die Hauptebene 5 des bearbeiteten Blechs 1 verläuft dabei horizontal. In der Seitenansicht von Figur 6 ist von dem bearbeiteten Blech 1 lediglich das Restgitter 6 sichtbar.

An dem in der Separierstellung ausgerichteten bearbeiteten Blech 1 wird das Fertigteil 2 aufgrund der vorstehend beschriebenen Nanojoints 11 von dem Restgitter 6 in der Schwerkraftrichtung gehalten. Im Falle der Fertigteile 3, 4 bewirkt der vorstehend beschriebene Formschluss mit dem Restgitter 6 Entsprechendes.

Ein rechteckförmiger Tragrahmen 28 der Positioniervorrichtung 27 ist an einer Teileablage 29 der Separiervorrichtung 24 um eine horizontale Achse schwenkbar gelagert. An dem Tragrahmen 28 ist das bearbeitete Blech 1 an den vier Ecken des Restgitters 6 mittels Halterungen 30 fixiert.

Die Halterungen 30 sind an dem Tragrahmen 28 senkrecht zu der Hauptebene 5 des bearbeiteten Blechs 1 federnd und folglich schwingungsfähig gelagert. Die Halterungen 30 sind Teil eine Separiereinheit 31, die außerdem herkömmliche Erregereinheiten 32 als Schwingungserzeuger umfasst.

Zur Erzeugung einer separierenden Schwingung wirken die Erregereinheiten 32 auf die Halterungen 30 ein. Die Halterungen 30 werden dadurch gemeinschaftlich mit dem an den Halterungen 30 fixierten bearbeiteten Blech 1 in eine durch Doppelpfeile angedeutete Schwingung versetzt, die mit hoher Frequenz und kleiner Amplitude senkrecht zu der Hauptebene 5 des bearbeiteten Blechs 1 ausgeführt wird.

Aufgrund der separierenden Schwingung werden die Fertigteile 2, 3, 4 von dem Restgitter 6 des bearbeiteten Blechs 1 separiert, indem die Nanojoints 11 zerstört werden (Fertigteil 2) oder indem der Formschluss mit dem Restgitter 6 aufgehoben wird (Fertigteile 3, 4).

Das Fertigteil 2 bewegt sich nach der Zerstörung der Nanojoints 11 in der Schwerkraftrichtung auf die Teileablage 29.

Der Formschluss zwischen dem Fertigteil 3 und dem Restgitter 6 wird gelöst, indem das Fertigteil 3 unter der Wirkung der separierenden Schwingung entgegen der Schwerkraftrichtung nach oben geschleudert wird.

Ungeachtet des senkrecht zu der Hauptebene 5 des bearbeiteten Blechs 1 in der Schwerkraftrichtung bestehenden Formschlusses mit dem Restgitter 6 führen die Fertigteile 4 aufgrund der separierenden Schwingung relativ zu dem Restgitter 6 eine Bewegung in der Schwerkraftrichtung aus.

Damit die Fertigteile 4 aufgrund der mittels der Separiereinheit 31 erzeugten separierenden Schwingung in der Schwerkraftrichtung von dem Restgitter 6 separiert werden können, wurden bei der trennenden Blechbearbeitung die Fasen 20, 21 an den Fertigteilen 4 und die diesen zugeordneten restgitterseitigen Trennflächen 22, 23 an dem Restgitter 6 mit einer entsprechenden Neigung gegen die Hauptebene 5 des bearbeiteten Blechs 1 und mit einer entsprechenden gegenseitigen Überdeckung parallel zu der Hauptebene 5 des bearbeiteten Blechs 1 erzeugt.

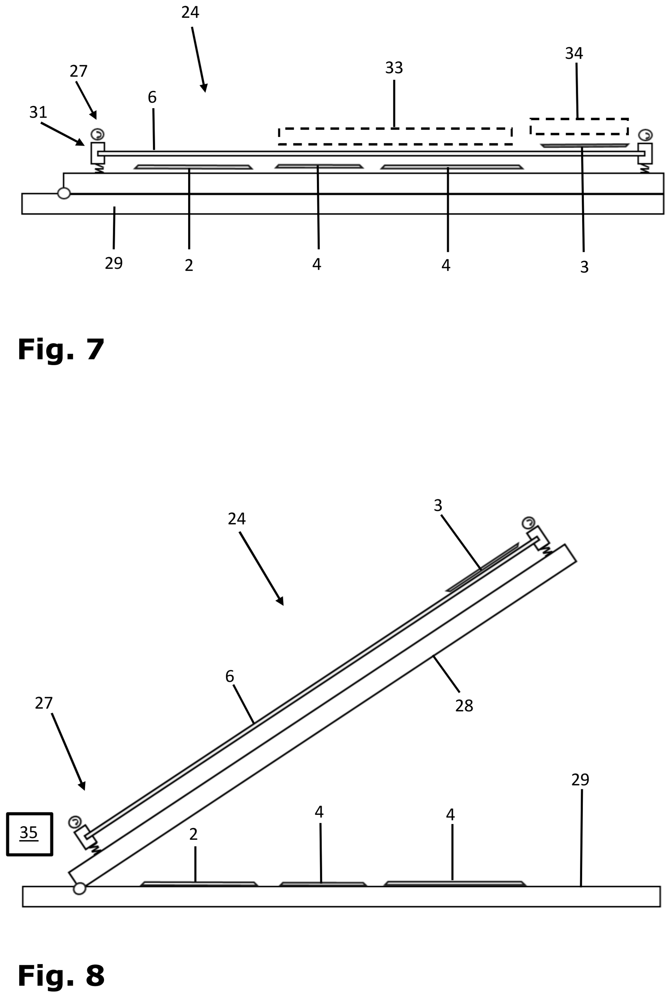

Figur 7 zeigt die Separiervorrichtung 24 während des Separierprozesses. Die von dem Restgitter 6 gelösten Fertigteile 2, 4 bewegen sich in der Schwerkraftrichtung zu der Teileablage 29. Das von dem Restgitter 6 gelöste Fertigteil 3 wurde aufgrund der separierenden Schwingung nach oben geschleudert.

Damit die Fertigteile 4 aufgrund der separierenden Schwingung in der Schwerkraftrichtung von dem Restgitter 6 abgeführt werden, ist die Separiereinheit 31 während der separierenden Schwingung mit einem in Figur 7 gestrichelt angedeuteten Fangelement in Form einer ersten Prallplatte 33 versehen. Während der separierenden Schwingung weist die erste Prallplatte 33 an einem fangelementseitigen beziehungsweise prallplattenseitigen Umkehrpunkt der separierenden Schwingung von der Oberseite des bearbeiteten Blechs 1 einen Abstand auf, der kleiner ist als die Abmessung der Fertigteile 4 senkrecht zu der Hauptebene 5 des bearbeiteten Blechs 1.

Eine in Figur 7 ebenfalls gestrichelt dargestellte zweite Prallplatte 34 der Separiereinheit 31 bildet ein Fangelement für das Fertigteil 3 aus. Während der separierenden Schwingung ist der Abstand der zweiten Prallplatte 34 von der Oberseite des bearbeiteten Blechs 1 an einem prallplattenseitigen Umkehrpunkt der separierenden Schwingung größer als die Abmessung des Fertigteils 3 senkrecht zu der Hauptebene 5 des bearbeiteten Blechs 1. Infolgedessen wird das Fertigteil 3 aufgrund der separierenden Schwingung mit einer nach oben begrenzten und insofern kontrollierten Bewegung entgegen der Schwerkraftrichtung von dem Restgitter 6 abgeführt.

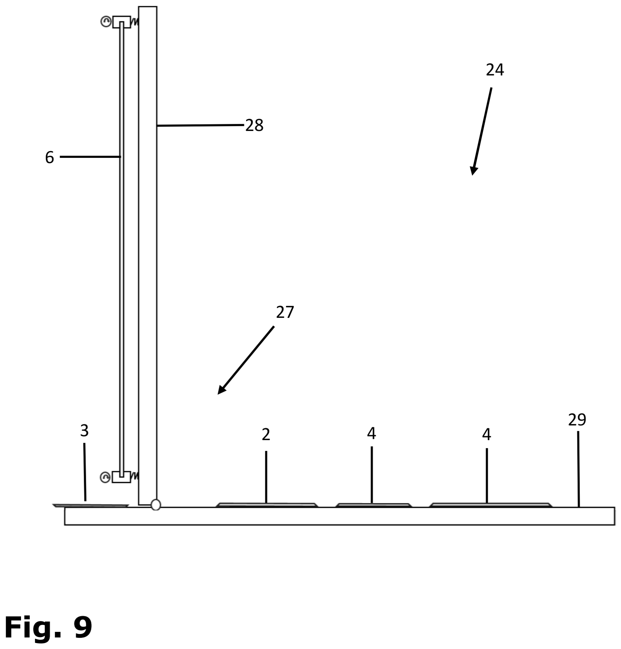

In den Figuren 8 und 9 sind die während des Separierprozesses verwendeten Prallplatten 33, 34 entfernt. Die Fertigteile 2, 4 sind auf der Teileablage 29 abgelegt.

Der Tragrahmen 28 der Positioniervorrichtung 27 wird ausgehend von den Verhältnissen gemäß den Figuren 6 und 7 mittels einer Stellvorrichtung 35 um seine horizontale Schwenkachse bis in die Senkrechte geschwenkt. Das aufgrund der separierenden Schwingung auf die Oberseite des Restgitters 6 gelangte Fertigteil 3 kann folglich unter Schwerkraftwirkung mit einer Bewegung über das Restgitter 6 auf die Teileablage 29 gleiten.

## Patentansprüche

1. Separierverfahren zum Separieren eines Werkstückteils (2, 3, 4) eines trennend bearbeiteten, vorzugsweise plattenartigen, Werkstücks (1), insbesondere eines trennend bearbeiteten Blechs, von einem das Werkstückteil (2, 3, 4) in einer Hauptebene (5) des bearbeiteten Werkstücks (1) umgebenden Restwerkstück (6) des bearbeiteten Werkstücks (1),
• wobei aufgrund der trennenden Werkstückbearbeitung eine werkstückteilseitige Trennfläche (7, 8; 12, 13; 16, 17, 20, 21) an dem Werkstückteil (2, 3, 4) und eine restseitige Trennfläche (9, 10; 14, 15; 18, 19, 22, 23) an dem Restwerkstück (6) gegen die Hauptebene (5) des bearbeiteten Werkstücks (1) gleichsinnig geneigt sind und mit gegenseitiger Überdeckung parallel zu der Hauptebene (5) des bearbeiteten Werkstücks (1) einander senkrecht zu der Hauptebene (5) des bearbeiteten Werkstücks (1) gegenüberliegen
und
• wobei zum Separieren des Werkstückteils (2, 3, 4) das bearbeitete Werkstück (1) mit seiner Hauptebene (5) horizontal oder unter einem spitzen Winkel gegen die Horizontale geneigt in einer Separierstellung ausgerichtet wird, in welcher das Werkstückteil (2, 3, 4) von dem Restwerkstück (6) in der Schwerkraftrichtung gehalten wird,
**dadurch gekennzeichnet, dass** bei Separierstellung des bearbeiteten Werkstücks (1) eine separierende Schwingung des Werkstückteils (2, 3, 4) und/oder des Restwerkstücks (6) senkrecht zu der Hauptebene (5) des bearbeiteten Werkstücks (1) erzeugt wird, aufgrund derer das Werkstückteil (2, 3, 4) von dem Restwerkstück (6) separiert wird.

2. Separierverfahren nach Anspruch 1, **dadurch gekennzeichnet, dass** die separierende Schwingung erzeugt wird, indem das Restwerkstück (6) zur Ausführung der separierenden Schwingung angeregt wird.

3. Separierverfahren nach einem der vorhergehenden Ansprüche, **dadurch gekennzeichnet,**
• **dass** das Werkstückteil (2) von dem Restwerkstück (6) aufgrund einer bei der trennenden Werkstückbearbeitung belassenen lösbaren Restverbindung (11) zwischen dem Werkstückteil (2) und dem Restwerkstück (6) in der Schwerkraftrichtung gehalten wird
und
• **dass** aufgrund der separierenden Schwingung die Restverbindung (11) zwischen dem Werkstückteil (2) und dem Restwerkstück (6) zerstört wird.

4. Separierverfahren nach einem der vorhergehenden Ansprüche, **dadurch gekennzeichnet,**
• **dass** das bearbeitete Werkstück (1) derart in der Separierstellung ausgerichtet wird, dass das Werkstückteil (3, 4) von dem Restwerkstück (6) in der Schwerkraftrichtung gehalten wird, indem sich das Werkstückteil (3, 4) aufgrund der werkstückteilseitigen Trennfläche (12, 13; 20, 21) in der Schwerkraftrichtung verjüngt und die restseitige Trennfläche (14, 15; 22, 23) des Restwerkstücks (6) der werkstückteilseitigen Trennfläche (12, 13; 20, 21) an der in die Schwerkraftrichtung weisenden Seite der werkstückteilseitigen Trennfläche (12, 13; 20, 21) unter Ausbildung eines in der Schwerkraftrichtung wirksamen Formschlusses zwischen dem Werkstückteil (3, 4) und dem Restwerkstück (6) gegenüberliegt
und
• **dass** aufgrund der separierenden Schwingung der in der Schwerkraftrichtung wirksame Formschluss zwischen dem Werkstückteil (3, 4) und dem Restwerkstück (6) aufgehoben wird.

5. Separierverfahren nach einem der vorhergehenden Ansprüche, **dadurch gekennzeichnet, dass** das Werkstückteil (2, 4) aufgrund der separierenden Schwingung mit einer Bewegung des Werkstückteils (2, 4) in der Schwerkraftrichtung von dem Restwerkstück (6) separiert wird.

6. Separierverfahren nach einem der vorhergehenden Ansprüche, **dadurch gekennzeichnet, dass** das Werkstückteil (3) aufgrund der separierenden Schwingung mit einer Bewegung des Werkstückteils (3) entgegen der Schwerkraftrichtung von dem Restwerkstück (6) separiert wird.

7. Separierverfahren nach einem der vorhergehenden Ansprüche, **dadurch gekennzeichnet, dass** die Ausrichtung des bearbeiteten Werkstücks (1) gegenüber der Horizontalen während der separierenden Schwingung und/oder nach Abschluss der separierenden Schwingung verändert wird.

8. Fertigungsverfahren umfassend
• einen Trenn-Verfahrensschritt
- im Rahmen dessen ein vorzugsweise plattenartiges Werkstück, insbesondere ein Blech, trennend bearbeitet wird unter Erzeugen eines bearbeiteten Werkstücks (1) mit einem Werkstückteil (2, 3, 4) und einem das Werkstückteil (2, 3, 4) in einer Hauptebene (5) des bearbeiteten Werkstücks (1) umgebenden Restwerkstück (6) des bearbeiteten Werkstücks (1),
- wobei das Werkstückteil (2, 3, 4) und das Restwerkstück (6) vollständig oder unter Belassen einer Restverbindung (11) zwischen dem Werkstückteil (2, 3, 4) und dem Restwerkstück (6) voneinander getrennt werden derart, dass an dem Werkstückteil (2, 3, 4) eine werkstückteilseitige Trennfläche (7, 8; 12, 13; 16, 17, 20, 21) und an dem Restwerkstück (6) eine restseitige Trennfläche (9, 10; 14, 15; 18, 19, 22, 23) erzeugt werden, wobei die werkstückteilseitige Trennfläche (7, 8; 12, 13; 16, 17, 20, 21) und die restseitige Trennfläche (9, 10; 14, 15; 18, 19, 22, 23) gegen die Hauptebene (5) des bearbeiteten Werkstücks (1) gleichsinnig geneigt sind und mit gegenseitiger Überdeckung parallel zu der Hauptebene (5) des bearbeiteten Werkstücks (1) einander senkrecht zu der Hauptebene (5) des bearbeiteten Werkstücks (1) gegenüberliegen
sowie
• einen dem Trenn-Verfahrensschritt zeitlich nachgeordneten Separier-Verfahrensschritt,
**dadurch gekennzeichnet, dass** als Separier-Verfahrensschritt das Separierverfahren nach einem der Ansprüche 1 bis 7 durchgeführt wird.

9. Fertigungsverfahren nach Anspruch 8, wobei als Separier-Verfahrensschritt das Separierverfahren nach Anspruch 4 durchgeführt wird, **dadurch gekennzeichnet, dass** in dem Trenn-Verfahrensschritt die werkstückteilseitige Trennfläche (12, 13; 20, 21) und die restseitige Trennfläche (14, 15; 22, 23) mit einer Neigung gegen die Hauptebene (5) des bearbeiteten Werkstücks (1) und/oder mit einer gegenseitigen Überdeckung parallel zu der Hauptebene (5) des bearbeiteten Werkstücks (1) erzeugt werden, aufgrund derer in dem auf den Trenn-Verfahrensschritt folgenden Separier-Verfahrensschritt das Werkstückteil (4) aufgrund der separierenden Schwingung mit einer Bewegung in der Schwerkraftrichtung von dem Restwerkstück (6) separiert wird.

10. Maschinelle Vorrichtung zum Separieren eines Werkstückteils (2, 3, 4) eines trennend bearbeiteten, vorzugsweise plattenartigen, Werkstücks (1), insbesondere eines trennend bearbeiteten Blechs, von einem das Werkstückteil (2, 3, 4) in einer Hauptebene (5) des bearbeiteten Werkstücks (1) umgebenden Restwerkstück (6) des bearbeiteten Werkstücks (1), wobei aufgrund der trennenden Werkstückbearbeitung eine werkstückteilseitige Trennfläche (7, 8; 12, 13; 16, 17, 20, 21) an dem Werkstückteil (2, 3, 4) und eine restseitige Trennfläche (9, 10; 14, 15; 18, 19, 22, 23) an dem Restwerkstück (6) gegen eine Hauptebene (5) des bearbeiteten Werkstücks (1) gleichsinnig geneigt sind und mit gegenseitiger Überdeckung parallel zu der Hauptebene (5) des bearbeiteten Werkstücks (1) einander senkrecht zu der Hauptebene (5) des bearbeiteten Werkstücks (1) gegenüberliegen,
• mit einer Positioniervorrichtung (27) für das bearbeitete Werkstück (1), mittels derer das bearbeitete Werkstück (1) mit seiner Hauptebene (5) horizontal oder unter einem spitzen Winkel gegen die Horizontale geneigt in einer Separierstellung ausrichtbar ist, wobei an dem in der Separierstellung ausgerichteten bearbeiteten Werkstück (1) das Werkstückteil (2, 3, 4) von dem Restwerkstück (6) in der Schwerkraftrichtung gehalten wird sowie
• mit einer Separiereinheit (31), mittels derer das Werkstückteil (2, 3, 4) von dem Restwerkstück (6) separierbar ist,
**dadurch gekennzeichnet, dass** die Separiereinheit (31) einen Schwingungserzeuger (32) aufweist, mittels dessen bei Separierstellung des bearbeiteten Werkstücks (1) eine separierende Schwingung des Werkstückteils (2, 3, 4) und/oder des Restwerkstücks (6) senkrecht zu der Hauptebene (5) des bearbeiteten Werkstücks (1) erzeugbar ist, aufgrund derer das Werkstückteil (2, 3, 4) von dem Restwerkstück (6) separiert wird.

11. Maschinelle Vorrichtung nach Anspruch 10, **dadurch gekennzeichnet, dass** mittels der Schwingungserzeugers (32) das Restwerkstück (6) zur Ausführung der separierenden Schwingung anregbar ist.

12. Maschinelle Vorrichtung nach Anspruch 11, **dadurch gekennzeichnet,**
• **dass** die Positioniervorrichtung (27) für das bearbeitete Werkstück (1) eine Halterung (30) für das Restwerkstück (6) aufweist, mittels derer das in der Separierstellung ausgerichtete bearbeitete Werkstück (1) fixiert ist und
• **dass** die Halterung (30) für das Restwerkstück (6) einen Teil der Separiereinheit (31) ausbildet, indem die Halterung (30) mittels des Schwingungserzeugers (32) der Separiereinheit (31) zu einer die separierende Schwingung des Restwerkstücks (6) bewirkenden Schwingung senkrecht zu der Hauptebene (5) des bearbeiteten Werkstücks (1) anregbar ist.

13. Maschinelle Vorrichtung nach einem der Ansprüche 10 bis 12, **dadurch gekennzeichnet, dass** die Separiereinheit (31) ein Fangelement (33, 34) aufweist, das während der separierenden Schwingung in Schwerkraftrichtung oberhalb des bearbeiteten Werkstücks (1) diesem gegenüberliegt.

14. Maschinelle Vorrichtung nach Anspruch 13, **dadurch gekennzeichnet, dass** das Fangelement (33, 34) plattenartig ausgebildet ist.

15. Maschinelle Vorrichtung nach Anspruch 13 oder Anspruch 14, **dadurch gekennzeichnet, dass** das Werkstückteil (2, 4) mit einer Bewegung in der Schwerkraftrichtung von dem Restwerkstück (6) separierbar ist, indem das Fangelement (33) während der separierenden Schwingung an einem fangelementseitigen Umkehrpunkt der separierenden Schwingung von der Oberseite des bearbeiteten Werkstücks (1) einen Abstand aufweist, der kleiner ist als die Abmessung des Werkstückteils (4) senkrecht zu der Hauptebene (5) des bearbeiteten Werkstücks (1).

16. Maschinelle Vorrichtung nach Anspruch 13 oder Anspruch 14, **dadurch gekennzeichnet, dass** das Fangelement (34) während der separierenden Schwingung an einem fangelementseitigen Umkehrpunkt der separierenden Schwingung von der Oberseite des bearbeiteten Werkstücks (1) einen Abstand aufweist, der größer ist als die Abmessung des Werkstückteils (4) senkrecht zu der Hauptebene (5) des bearbeiteten Werkstücks (1).

17. Maschinelle Vorrichtung nach einem der Ansprüche 10 bis 16, **dadurch gekennzeichnet, dass** die Positioniervorrichtung (27) für das bearbeitete Werkstück (1) eine Stellvorrichtung (35) aufweist, mittels derer die Ausrichtung des bearbeiteten Werkstücks (1) gegenüber der Horizontalen variabel einstellbar ist.

18. Maschinelle Fertigungsanordnung
• mit einer maschinellen Trennvorrichtung (26), mittels derer ein vorzugsweise plattenartiges Werkstück, insbesondere ein Blech, trennend bearbeitbar ist unter Erzeugung eines bearbeiteten Werkstücks (1) mit einem Werkstückteil (2, 3, 4) und einem das Werkstückteil (2, 3, 4) in einer Hauptebene (5) des bearbeiteten Werkstücks (1) umgebenden Restwerkstück (6) des bearbeiteten Werkstücks (1), wobei mittels der Trennvorrichtung (26) das Werkstückteil (2, 3, 4) und das Restwerkstück (6) vollständig oder unter Belassen einer Restverbindung (11) voneinander trennbar sind und dabei an dem Werkstückteil (2, 3, 4) eine werkstückteilseitige Trennfläche (7, 8; 12, 13; 16, 17, 20, 21) und an dem Restwerkstück (6) eine restseitige Trennfläche (9, 10; 14, 15; 18, 19, 22, 23) erzeugbar sind derart, dass die werkstückteilseitige Trennfläche (7, 8; 12, 13; 16, 17, 20, 21) und die restseitige Trennfläche (9, 10; 14, 15; 18, 19, 22, 23) gegen die Hauptebene (5) des bearbeiteten Werkstücks (1) gleichsinnig geneigt sind und mit gegenseitiger Überdeckung parallel zu der Hauptebene (5) des bearbeiteten Werkstücks (1) einander senkrecht zu der Hauptebene (5) des bearbeiteten Werkstücks (1) gegenüberliegen sowie
• mit einer maschinellen Separiervorrichtung (24), mittels derer das Werkstückteil (2, 3, 4) von dem Restwerkstück (6) des bearbeiteten Werkstücks (1) separierbar ist,
**dadurch gekennzeichnet, dass** als maschinelle Separiervorrichtung (24) die maschinelle Vorrichtung nach einem der Ansprüche 10 bis 17 vorgesehen ist.
